# EUROPEAN PATENT APPLICATION

(11) **EP 2 453 401 A1**
(43) Date of publication of application: **16.05.2012**
(21) Application number: 11188358.3
(22) Date of filing: 09.11.2011
(51) Int. Cl.: G06Q 30/00

(54) **Engaging with a target audience over an electronically mediated forum**

(30) Priority: 12.11.2010 US 944877
(71) Applicant: Accenture Global Services Limited, Dublin 4 (IE)
(72) Inventor: Dempski, Kelly L., Evanston IL 60202 (US)
(74) Representative: de Beaumont, Michel

(57) **Abstract**

A method and apparatuses are provided for engaging with a target audience over an electronically mediated forum. A seed message may be posted on an electronically mediated forum by a processing device. The electronically mediated forum may be monitored by the processing device to detect at least one instance of engagement with the seed message. The processing device may extract engagement data including data characterizing the at least one engagement with the seed message. The engagement data may be analyzed by the processing device to provide feedback data. A targeted electronic message may be generated by the processing device based on the feedback data. The targeted electronic message may be configured for posting on the electronically mediated forum.

## Description

### FIELD OF THE INVENTION

The instant disclosure relates generally to the analysis of audience engagement with a message posted on an electronically mediated forum and, more specifically, to techniques for generating a targeted message for posting on an electronically mediated forum based on the analysis.

### BACKGROUND OF THE INVENTION

Electronically mediated forums are digital forums where messages may be posted, viewed, and engaged with. For example, well known electronically mediated forums include social network websites (e.g., Facebook®, MySpace®, and Twitter®), blogs, conventional websites, etc. The unifying characteristic shared by each of these different types of forums is that they all allow users to post messages that other users can interact with. As used herein, a message may include both textual content and/or audio-visual content (e.g., a sound-clip, image, video, etc.).

For example, some conventional electronically mediated forums allows users to post messages on specific pages dedicated to those users (e.g., a user's individual Facebook, MySpace, or Twitter page). Other users of the forum may then view the posted message and engage with it. Users may engage with a posted message in a variety of ways. For example, merely viewing a posted message (e.g., by navigating to the page containing the posted message) may constitute engagement with that message. However, users can engage with a posted message in more intimate ways as well.

For example, users can engage with a posted message by posting a comment in response to the originally posted message, indicating that they "like" the originally posted message, denoting themselves as a "fan" of the entity responsible for the posted message, sharing the posted message and/or address of the page containing the posted message with other users (e.g., of the same forum), etc. Additionally, where the originally posted message includes, for example, a link to another webpage where a user can purchase a product/service described in the posted message, a user may engage with the posted message by clicking on the link.

Increasingly, entities are recognizing electronically mediated forums as valuable channels for both advertising and market research. For example, many companies now have their own Facebook page. Companies often use their Facebook pages to post messages announcing the release of new products and services. These message are essentially "micro-campaigns" meant to engage a target audience in various ways and, in some cases, incite them to action (e.g., motivate the target audience to purchase the product and/or services described in the posted message). Other entities besides corporations have been utilizing electronically mediated forums in similar ways. For example, many rock bands now have their own electronically mediated forum page wherein they can post messages in order to engage with their fans, announce concert dates and album release dates, etc.

Despite the heightened awareness regarding the value of electronically mediated forums as a means of engaging a target audience, little has been done in the way of adjusting the manner in which entities engage with their target audience. For example, the companies (e.g., Facebook, Twitter, etc.) hosting these electronically mediated forums provide little to no analytic data regarding how, when, where, and why target audience members engage with particular posted messages. Furthermore, conventional systems offer no analytic data regarding messages on a per-posted message basis.

It is therefore desirable to provide techniques for engaging with a target audience over an electronically mediated forum.

### SUMMARY OF THE INVENTION

The instant disclosure describes techniques for engaging with a target audience over an electronically mediated forum. To this end, a method is described for engaging with a target audience over an electronically mediated forum. In this example, the method includes posting a seed message on the electronically mediated forum with an engagement tool. The engagement tool may monitor the electronically mediated forum to detect an instance of engagement with the seed message. For example, the engagement is user activity by a user of the mediated forum. The engagement tool may also extract engagement data that characterizes any instance of engagement with the seed message. This engagement data may be analyzed by the engagement tool to provide feedback data. The feedback data may further be used by the engagement tool to generate a targeted message. The targeted message is intended to better engage the target audience because it takes into account the feedback data generated following the analysis of the engagement data. The generated targeted message may be configured for posting on the electronically mediated forum. In one example, the method may include posting, by the engagement tool, the targeted message on the electronically mediated forum at a particular time of day based on the feedback data.

In one example the method also includes configuring engagement parameters with the engagement tool. In this example, analyzing the engagement data may include extracting values from the engagement data to provide extracted values and comparing each extracted value with its corresponding engagement parameter to derive comparison results. The feedback data may include the comparison results. In another example, generating the targeted message includes modifying the seed message to provide the targeted message based on the comparison results.

In one example, the method also includes generating metatag data describing the seed message with the engagement tool. The engagement tool may compare the generated metatag data with the comparison results to provide metatag comparison results. In this example, generating the targeted message may include modifying the seed message to provide the targeted message based on the metatag comparison results.

In another example, the method also includes analyzing the seed message using a semantic complexity algorithm with the engagement tool. The engagement tool may compare the seed message complexity rating with the comparison results to provide seed message complexity comparison results. In this example, generating the targeted message may include modifying the seed message to provide the targeted message based on the seed message complexity comparison results.

An apparatus for carrying out the above method is also disclosed. The apparatus includes a processing device and memory operatively connected to the processing device. The memory includes executable instructions that when executed by the processing device cause the processing device to carry out the described methods.

In an embodiment, an apparatus for engaging with a targeted audience over an electronically mediated forum includes a message generation module, an engagement monitoring and extraction module operatively connected to the message generation module, and an engagement data analysis module operatively connected to the engagement monitoring and extraction module. The message generation module is operative to receive message content and generate a message including the message content based on the received message content to provide a generated message. The generated message is configured for posting on the electronically mediated forum. The message generation module is also operative to post the generated message on the electronically mediated forum to provide a posted message. The engagement monitoring and extraction module is operative to monitor the electronically mediated forum to detect any instance of engagement with the posted message and extract engagement data (e.g., data characterizing the at least one engagement with the posted message). The engagement data analysis module is operative to analyze the engagement data to provide feedback data.

In one example, the apparatus also includes a graphical user interface (GUI) operatively connected to the engagement data analysis module and the message generation module. In this example, the GUI is operative to receive and display the feedback data. In one example, the GUI is further operative to receive the message content and provide the message content to the message generation module. In another example, the GUI is operative to receive engagement parameters and provide the engagement parameters to the engagement data analysis module. In yet another example, the engagement data analysis module is operative to receive the engagement parameters from the GUI, extract values from the engagement data, and compare the extracted values with corresponding ones of the engagement parameters to derive comparison results. In this example, the feedback data may include the comparison results.

In still another example, the GUI is further operative to receive targeted message content based on the displayed feedback data and provide the targeted message content to the message generation module. The message generation module is operative to receive the targeted message content and generate a targeted message including the targeted message content based on the received targeted message content to provide a generated targeted message. In another example, the message generation module is further operative to post the generated targeted message on the electronically mediated forum.

### BRIEF DESCRIPTION OF THE DRAWINGS

The features described in this disclosure are set forth with particularity in the appended claims. These features will become apparent from consideration of the following detailed description, taken in conjunction with the accompanying drawings. One or more embodiments are now described, by way of example only, with reference to the accompanying drawings wherein like reference numerals represent like elements and in which:

FIG. 1 is a block diagram illustrating one example of a system including an apparatus for engaging with a target audience over an electronically mediated forum;

FIG. 2 is a diagram illustrating one example of an online environment including an apparatus for engaging with a target audience over an electronically mediated forum;

FIG. 3 illustrates one example of a graphical user interface (GUI) that may be included in the apparatuses of FIGS. 1-2;

FIG. 4 is a flowchart illustrating one example of a method for engaging with a target audience over an electronically mediated forum;

FIG. 5 illustrates another example of a graphical user interface (GUI) that may be included in the apparatuses of FIGS. 1-2.

### DETAILED DESCRIPTION OF THE EMBODIMENTS

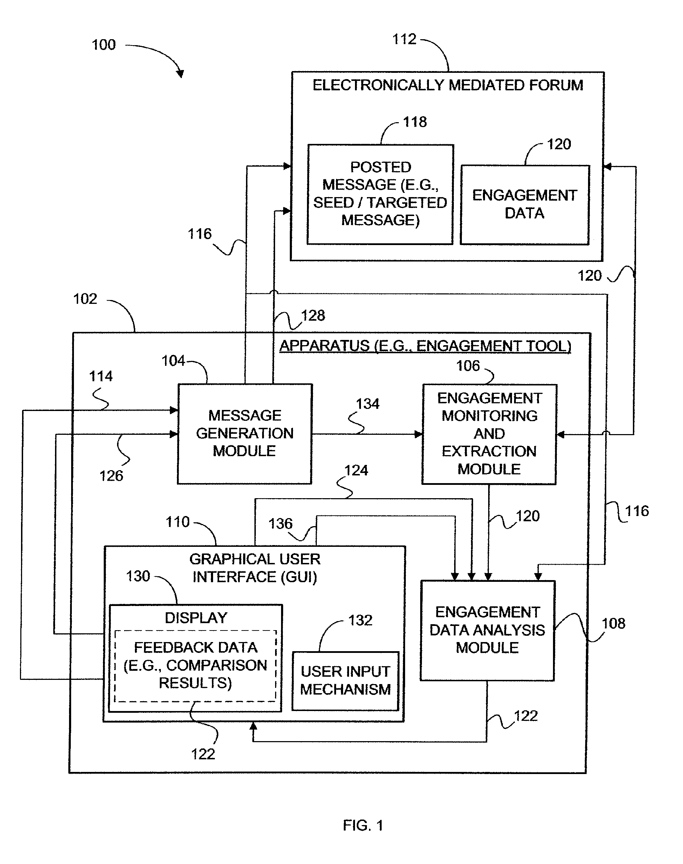

Referring now to FIG. 1, one example of a system 100 for engaging with a target audience over an electronically mediated forum is illustrated. In the illustrated example, system 100 includes an apparatus 102, such as an engagement tool, in communication with an electronically mediated forum 112. The apparatus 102 may communicate with the electronically mediated forum 112 over, for example, any suitable public or private communication network (not shown) such as the Internet, or proprietary networks such as enterprise local area or wide area networks, respectively. The apparatus 102 includes a message generation module 104, an engagement monitoring and extraction module 106, an engagement data analysis module 108, and a graphical user interface (GUI) 110. As used herein, the term "module" can include an electronic circuit, one or more processors (e.g., shared, dedicated, or group of processors such as but not limited to microprocessors, digital signal processors, or central processing units) and memory that execute one or more software or firmware programs, combinational logic circuit(s), an application specific integrated circuit, and/or other suitable components that provide the described functionality. Further still, the apparatus 102 may be implemented by networked computing devices, such as server computers or the like, wherein each computing device implements one or more of the illustrated modules 104-108. Alternatively, the apparatus 102 may be implemented as a single computing device that provides all of the functionality of apparatus 102 as discussed in this disclosure.

The message generation module 104 is operatively connected to GUI 110 and the engagement monitoring and extraction module 106 over any suitable communication channel, such as a bus. The message generation module 104 is operative to receive message content 114. As used herein, message content 114 may include text, image(s), video(s), audio, or any combination thereof In one example, a user may generate the message content 114 using the user input mechanism 132 of the GUI 110. The user input mechanism 132 may include, for example, a mouse, keyboard, keypad, touch-screen, touch pad, microphone, or any other suitable user input mechanism known to those having skill in the art. In one simple example, the message content 114 may merely include the text of the generated message 116 sought to be posted on the electronically mediated forum 112. Although the message content 114 is shown being received from the GUI 110, in practice, the message content 114 may be received from virtually any suitable source.

In any event, the message generation module 104 is operative to provide a generated message 116 comprising the received message content 114 (wherein the generated message 116 is also based on the received message content 114), that is configured for posting on the electronically mediated forum 112. The message generation module 104 is further operative to post the generated message 116 on the electronically mediated forum 112 to provide a posted message 118. In one example, the generated message 116 may comprise a seed message. As used herein, a seed message is a generated message 116 that is intended to stimulate target audience engagement. Typically, the seed message will be the first message that is generated using the apparatus 102, and serves as a baseline for the generation of additional (e.g., targeted) messages. However, it is understood that targeted messages may be based on audience engagement with prior targeted messages as well. In this sense, any prior message upon which a targeted message is based may be regarded as a "seed" message.

The message generation module 104 is also operative to provide posted message identification data 134 to the engagement monitoring and extraction module 106. The posted message identification data 134 comprises all of the data necessary for the engagement monitoring and extraction module 106 to locate a posted message 118 on the electronically mediated forum 112. For example, the posted message identification data 134 may include the URL address of the specific page within the electronically mediated forum 112 that contains the posted message 118. In another example, the electronically mediated forum 112 may return a posting ID that the apparatus 102 may use to track the posted message 118. However, other suitable identification information that may be used to locate a posted message 118 (e.g., the time of day that the message under consideration was posted) may also be included in the posted message identification data 134.

The engagement monitoring and extraction module 106 is operative to monitor the electronically mediated forum 112 to detect at least one instance of engagement with the posted message 118. In one example, the engagement monitoring and extraction module 106 may be implemented as a computer program such as a bot (e.g., a web crawler) capable of scanning the content of the page in the electronically mediated forum 112 containing the posted message 118 in order to detect one or more instances of engagement with the posted message 118. In another example, the electronically mediated forum 112 may provide an application programming interface (API) allowing the apparatus 102 to directly query the electronically mediated forum 112 in order to detect one or more instances of engagement with the posted message 118. Alternatively, the engagement monitoring and extraction module 106 may be implemented using any other suitable data monitoring and extraction techniques known in the art.

As noted above, there are a variety of ways in which a posted message 118 may be engaged with over the electronically mediated forum 112. For example, the engagement monitoring and extraction module 106 may detect an instance of engagement when the posted message 118 is clicked (e.g., a viewer clicks on the posted message with their mouse cursor). In another example, an instance of engagement may be detected when a comment is posted in response to the originally posted message 118. In other examples, an instance of engagement may be detected when a viewer of the posted message indicates that they "like" the posted message 118, a viewer denotes themselves as a "fan" of the entity responsible for the posted message 118, a viewer shares the posted message 118 and/or address of the page containing the posted message with someone else (e.g., another user of the electronically mediated forum 112), etc. These different types of engagements may be detected using any suitable detection technique, such as the detection techniques discussed above (e.g., via a bot or API).

Additionally, where the originally posted message 118 includes, for example, a link to another webpage where a user can purchase a product/service described in the posted message 118, a viewer may engage with the posted message 118 by clicking on the link. In one example, this type of viewer engagement may be detected by instrumenting the link in the posted message 118 along with the landing page (i.e., the webpage that the link directs a viewer to). This type of instrumentation may be accomplished using suitable link/landing page instrumentation techniques known in the art. Any of the foregoing examples constitute ways in which a viewer can engage with a posted message 118.

The engagement monitoring and extraction module 106 is further operative to extract engagement data 120 describing each instance of engagement with a posted message 118. For example, when a viewer comments on a posted message 118, the page containing the posted message 118 may be updated to include the text/image/video/audio/etc. forming the content of the comment, the time of day that the comment was posted, the identity of the commenter, an image (e.g., an avatar) associated with the commenter, etc. This type of information is referred to herein as engagement data 120 (i.e., data characterizing an engagement with a posted message 118). Engagement data 120 may take a variety of forms. For example, engagement data 120 is not limited to information that is readily available on the page of the electronically mediated forum 112 containing the posted message 118 (e.g., the content of each comment, the total number of comments, the total number of "likes," the total number of "shares," etc.), but may also include deep-seated information describing, for example, demographic information about the viewer(s) of the posted message 118.

For example, in many instances the engagement monitoring and extraction module 106 may extract engagement data 120 comprising data describing the identity of the viewer(s). This is especially true where a viewer has a "public profile" (e.g., on Facebook) or has signed up for a service such as "Facebook Connect." As known in the art, when a viewer has a "public profile," any other user of the electronically mediated forum 112 may view that user's profile to glean information about the user. Similarly, Facebook Connect is a platform that allows users to "connect" their Facebook identity, friends, and privacy information with third party platforms (e.g., the engagement tool of the present disclosure). That is, when a user utilizes a platform such as Facebook Connect (or any other suitable information sharing platform known in the art), authorized third parties may gain access to detailed information about that user. In these types of instances, the engagement monitoring and extraction module 106 may extract engagement data 120 such as data indicating the name, age, gender, location, education, income, profession, etc. for any viewer who has viewed the posted message 118. The foregoing types of engagement data 120 are exemplary in nature and are not intended to limit any additional types of data that may be useful in furthering the described functionality of the apparatus 102.

The engagement data 120 that has been extracted by the engagement monitoring and extraction module 106 may be provided to the engagement data analysis module 108 over any suitable communication channel known in the art, such as, for example, a bus. The engagement data analysis module 108 is operative to analyze the engagement data 120 in order to provide feedback data 122. The engagement data analysis module 108 is operative to analyze the engagement data 120 in a variety of ways. In one example, the engagement data analysis module 108 is operative to analyze the engagement data 120 by aggregating, for example, the total number of comments/likes/shares/etc. for a given posted message 118, where that information is not directly available as part of the engagement data 120. In another example, the engagement data analysis module 108 is operative to analyze the engagement data 120 by generalizing (e.g., averaging) the demographic information about the viewers of the posted message 118. For example, the engagement data analysis module 108 may analyze the engagement data by determining that sixty-percent of the viewers were male, that the average age for a viewer was thirty-five years old, that the average viewer had an undergraduate college education, that the average income of a viewer was $45,000/year, that fifty-percent of the viewers were located in the eastern time zone, etc.

Additionally, the engagement data analysis module 108 could analyze the engagement data 120 to ascertain when (i.e., what time of day) the posted message 118 was most often viewed, when the posted message was most often commented on (or denoted as being "liked" or "shared"), etc. In one example, the engagement data analysis module 108 may also derive information (e.g., demographic information) about a viewer from other readily available information. For example, the engagement data analysis module 108 may determine that a particular viewer is male based on engagement data 120 indicating that the viewer's name was John.

The data that is created by the engagement data analysis module 108 following the analysis of the engagement data 120 is referred to herein as feedback data 122. Generally, the feedback data 122 is useful in determining how to improve subsequently generated messages in order to better engage with the target audience. That is to say, the feedback data 122 is informative as to how/when/why/where viewers engaged with the previously posted message, and therefore, is particularly useful in designing a new message to better engage with the target audience. The feedback data 122 may be provided to the GUI 110 over a suitable communication channel, such as, for example, a bus.

Furthermore, in one example, the engagement data analysis module 108 may analyze engagement data 120 by extracting values from the engagement data 120 to provide extracted values. These extracted values may be compared with engagement parameters 124 to derive comparison results (which form part of the feedback data 122). For example, in this embodiment, a user may use the input mechanism 132 to configure engagement parameters 124. The engagement parameters 124 effectively serve as success criteria (i.e., a set of desired outcomes of a posted message 118) allowing the engagement data analysis module 108 to determine whether, for example, the desired target audience is engaging with a posted message 118 or whether the target audience is engaging with a posted message 118 in a desired manner.

The engagement parameters 124 may define, for example, how many comments the entity using the apparatus 102 would like the posted message 118 to elicit, how many "likes" the entity using the apparatus 102 would like the posted message 118 to elicit, how many "shares" the entity using the apparatus 102 would like the posted message 118 to elicit, and/or how many conversions the entity using the apparatus 102 would like the posted message 118 to elicit. As used herein, a conversion occurs when a viewer takes an action proposed by a posted message 118. What constitutes a conversion may vary from cases to case and may be defined as desired. For example, in one embodiment, a conversion may occur when a viewer follows a web link contained in the posted message (e.g., a web link directing the viewer to a web site where they can purchase the product/service described in the posted message 118). In another embodiment, it might be required that a viewer actually purchase the product/service referenced in the posted message 118 in order for that action to constitute a conversion. Additionally, a conversion may occur if a viewer votes on a particular question posed in the posted message 118. For example, the posted message may include a voting widget, as known in the art, requesting viewers to vote on an issue. Alternatively, the posted message 118 may include a link to another page where viewers can vote on the issue. In any event, if a viewer participates in the vote, that action may constitute a conversion as well.

Furthermore, the engagement parameters 124 may specify desired demographic data. For example, the engagement parameters 124 may define a desired age for the viewers, a desired gender for the viewers, a desired income level for the viewers, a desired location of the viewers (e.g., Eastern Time Zone), a desired education for the viewers (e.g., undergraduate degree), etc.

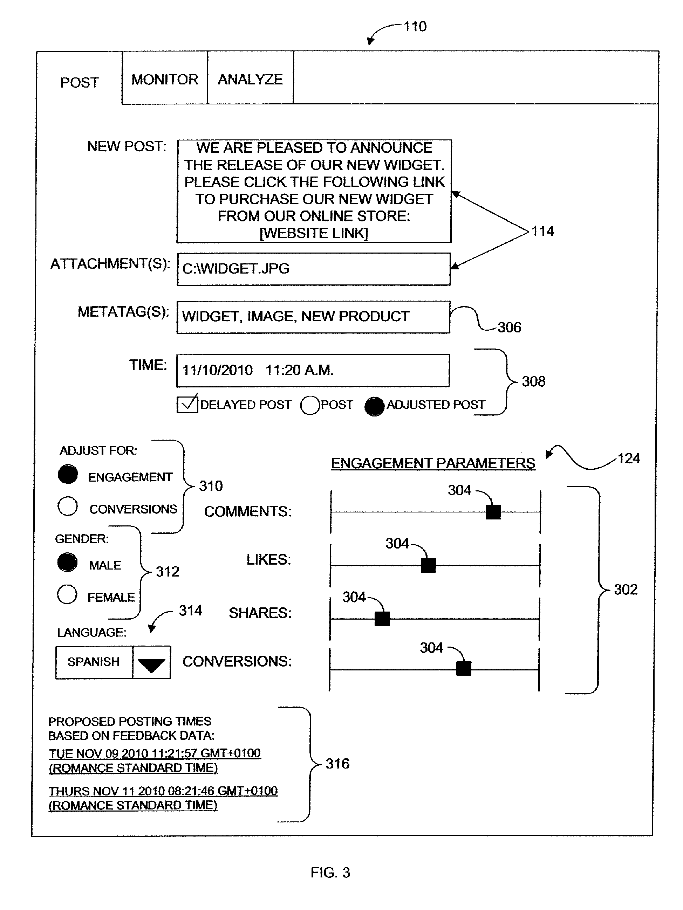

The engagement parameters 124 may be configured in a variety of ways. For example, FIG. 3 illustrates one example of the graphical user interface 110. In this example, the engagement parameters 124 are configured using slider components 302. Thus, in this example, a user may use a user input mechanism 132, such as a mouse, to move each slider 304 of each respective slider component 302 to a particular location. In one example, the location of the slider 304 on the slider component 302 reflects how many engagements of a particular type the entity operating the apparatus would like to elicit.

For example, the slider 304 on the "COMMENTS" slider component 302 is located on the far right of the scale. This may indicate that the entity interacting with the GUI 110 desires the posted message 118 to elicit many comments. While the slider components 302 are shown generically in FIG. 3, it is recognized that different locations on the slider components 302 may correspond to specific values (e.g., where each location on the scale corresponds to a specific number of comments that the entity would like to elicit). Continuing with the example shown in FIG. 3, the location of the slider 304 on the "SHARES" slider component 302 may indicate that the entity interacting with the GUI 110 does not desire as many "shares" as they do "comments," for example. While slider components 302 are depicted in FIG. 3 as a means of configuring the engagement parameters 124, those having ordinary skill in the art will recognize that other suitable means for configuring the engagement parameters may be equally employed (e.g., drop-down menus, radio buttons, direct input entry fields, etc.).

FIG. 3 also illustrates several other exemplary aspects of the GUI 110. For example, The GUI 110 may include posting time specification components 308. The posting time specification components 308 provide a user with several different options for selecting when the message content 114 will be posted. For example, in one embodiment, the user may select the "DELAYED POST" option (using, for example, a radio button or any other suitable selection mechanism). When this option is selected, the user may specify a particular time in the future that the message content 114 will be posted. The user may specify the future posting time by entering the desired posting time in the "TIME" text field of the posting time specification components 308. In another example, the user may select the "POST" option (e.g., by selecting the "POST" radio button with their mouse cursor). In this example, the message content will be posted immediately. In still another example, the user may select the "ADJUSTED POST" option (e.g., by selecting the "ADJUSTED POST" radio button with their mouse cursor). In this example, the message may be automatically posted at a particular time based on the feedback data 122. That is, in the "ADJUSTED POST" embodiment, the apparatus 102 may determine a precise time for posting the message based on the feedback data 122, and affect the posting of the message content 114 at that determined time in order to better engage with the target audience.

Furthermore, FIG. 3 illustrates additional posting options available to a user. For example, a user may use the "ADJUST FOR" component 310 to select a desired effect for the message at issue. In the illustrated example, a user may choose to adjust for either engagement or conversions (although it is recognized that other options may be available as desired). In this manner, the apparatus 102 may modify the message content 114, posting time, etc. in furtherance of a user's desired effect of the posted message. Similarly, the "GENDER" component 312 may be used to identify a particular gender that the message should appeal to. Likewise, the "LANGUAGE" component may be used to identify a particular language of target audience members that the message should elicit engagement from. Again, while drop down menus (e.g., the drop down menu associated with the language component 314) and radio buttons are illustrated, components 310, 312, and/or 314 may be implemented using any suitable input mechanisms known in the art.

The GUI 110 of FIG. 3 also illustrates proposed posting times based on feedback data 316. This component 316 includes recommended posting times for the message content 114. The recommended posting times may be included as part of the feedback data 122 that is provided from the engagement data analysis module 108 to the GUI 110. That is, in one example, the recommended posting times are determined by the engagement data analysis module 108 based on its analysis of the engagement data 120. The proposed posting times based on feedback data 316 are intended to suggest times when target audience members would be likely to view (and thus engage) with the posted message 118.

Thus, the engagement data analysis module 108 may extract values from the engagement data 120 (e.g., how many comments the posted message 118 elicited) and compare those extracted values with corresponding ones of the engagement parameters 124 to derive comparison results. The comparison results may indicate, for example, that the posted message 118 elicited less/more comments than desired. In this manner, the entity utilizing the apparatus 102 can use the feedback data 122 including the comparison results to better understand what aspects of a posted message 118 are most important in obtaining their desired outcome.

As noted previously, the engagement data analysis module 108 may provide the feedback data 122 (including any comparison results) to the GUI 110. In one example, the feedback data 122 may be displayed on a display 130 of the GUI 110. The display 130 may comprise any suitable display, either integral or external, such as a cathode-ray tube (CRT), liquid crystal display (LCD), light-emitting diode (LED) display, or other display known in the art. In this manner, an entity using the apparatus 102 may view the feedback data 122 on the display 130 to understand how viewers have been engaging with the posted message 118. The entity may then modify the originally generated message content 114 (e.g., message content making up the seed message) using, for example, the input mechanism 132, in order to provide targeted message content 126 to the message generation module 104. Accordingly, the message generation module 104 may generate a targeted message 128 based on the feedback data 122 that is configured for posting on the electronically mediated forum 112. This process may continue through as many iterations as desired, such that the most recently generated targeted message 128 will be based on all of the historical engagement data 120 that has been extracted and analyzed up until that point.

In one embodiment, the apparatus 102 may also be used to generate metatag data 136 describing the generated message 116 (e.g., the seed message). For example, the metatag data 136 may indicate whether the generated message 116 includes image(s), audio, and/or video. Further, the metatag data 136 may describe the content of the generated message 116. For example, with reference to FIG. 3, the GUI 110 may include a metatag data creation field 306 that permits the entity using the apparatus 102 to enter text describing the generated message 116. With continued reference to FIG. 3, the message content 114 is depicted as including text ("We are pleased to announce the release of our new widget. Please click the following link to purchase our new widget from our online store: [website link]") and an image (denoted by the "Attachments" field, which indicates that a JPEG image has been attached to the textual content). Thus, the metatag data 136 includes terms that describe the message content 114 (e.g., "Widget", "Image," and "New Product").

Continuing with this embodiment, the metatag data 136 may be provided to the engagement data analysis module 108 for further analysis. The engagement data analysis module 108 is operative to compare the generated metatag data 136 with the comparison results (i.e., the results of the comparison between the extracted values of the engagement data 120 and the engagement parameters 124, as discussed previously) to provide metatag comparison results. As with the general comparison results discussed above, the metatag comparison results may be included as part of the feedback data 122 that is provided to the GUI 110. In this manner, the entity using the apparatus 102 may view the feedback data 122 (including the metatag comparison results) on the display 130 of the GUI 110. This allows the entity viewing the feedback results 122 to gain an understanding of, for example, whether generated messages 116 containing images elicited greater engagement from the viewers than messages 116 containing video (assuming that the tags for the respective messages 116 denoted them as including an "Image" or a "Video," respectively). Based on the review of the feedback data 122 including the metatag comparison results, the originally generated message 116 (e.g., the seed message) may be modified to provide a new generated targeted message 128 that takes into account the metatag comparison results.

In another embodiment, the generated message 116 (e.g., the seed message) may be provided directly to the engagement data analysis module 108 from the message generation module 104 for analysis. For example, the engagement data analysis module 108 may analyze the generated message 116 using a semantic complexity algorithm (as known in the art) to provide a seed message complexity rating. The engagement data analysis module 108 is operative to compare the seed message complexity rating with the comparison results (i.e., the results of the comparison between the extracted values of the engagement data 120 and the engagement parameters 124, as discussed previously) to provide seed message complexity comparison results. As with the general comparison results and metatag comparison results discussed above, the seed message complexity comparison results may be included as part of the feedback data 122 that is provided to the GUI 110. This allows an entity viewing the feedback data 122 to gain an understanding of how the complexity of the text in a generated message 116 affects how viewers engage with the message. For example, the seed message complexity comparison results of the feedback data 122 may indicate that the less complex a particular posted message 118 is, the more comments that viewers will post regarding that message 118. Based on the review of the feedback data 122 including the seed message complexity comparison results, the originally generated message 116 (e.g., the seed message) may be modified to provide a new generated targeted message 128 that takes into account the seed message complexity comparison results.

In a similar vein, in one embodiment, one or more viewer comments that are provided as part of the engagement data 120 may be analyzed by the engagement data analysis module 108 using the semantic complexity algorithm to provide comment complexity rating(s). These complexity ratings, which may be included as part of the feedback data 122, may shed light on, for example, the age of the commenter, the educational level of the commenter, etc.

In yet another embodiment, the feedback data 122 may indicate a time of day when a posted message 118 is most likely to be viewed. This information may be determined, for example, by the engagement data analysis module 108 analyzing the engagement data 120 to determine the average time of day that a comment was posted in response to the posted message 118. Other techniques for determining a time of day when a posted message 118 is most likely to be viewed may also be suitably employed (e.g., relying on the average time that viewers indicated that they "liked" a posted message 118). In any case, this feedback data 122 may be used by the apparatus 102 to post a targeted message 128 on the electronically mediated forum 112 at a particular time of day. In this manner, the apparatus 102 may be used to post a message (e.g., a generated message 116 or a generated target message 128) at a time of day when it is most likely to be viewed by the target audience.

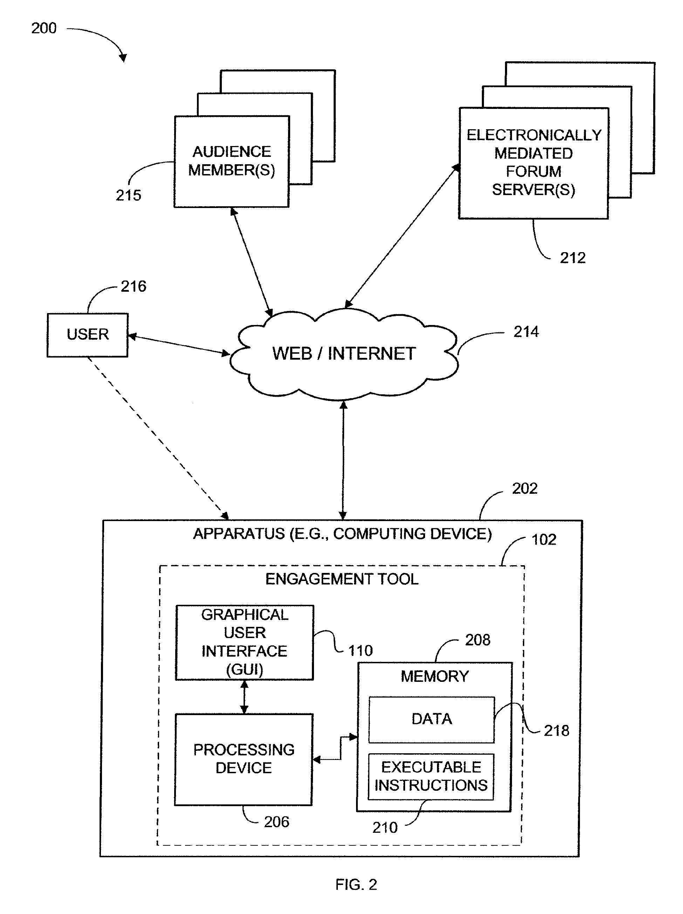

In accordance with the above, FIG. 2 illustrates a representative processor-based apparatus 202 that may be used to implement the teachings of the instant disclosure in an online environment 200. The apparatus comprises a processing device 206 operatively connected to memory 208. Memory 208, in turn, comprises stored executable instructions 210 and data 218. In an embodiment, the processing device 206 may comprise one or more processing devices such as a microprocessor, microcontroller, digital signal processor, or combinations thereof capable of executing the stored instructions 210 and operating upon the stored data 218. Likewise, memory 208 may comprise one or more devices such as volatile or nonvolatile memory including but not limited to random access memory (RAM) or read only memory (ROM). Processing device 206 and memory 208 of the types illustrated in FIG. 2 are well known to those having ordinary skill in the art. In one embodiment, the processing techniques for each component illustrated in FIG. 1 and described herein are implemented as a combination of executable instructions 210 and data 218 within memory 208.

The electronically mediated forum 112 may be implemented via one or more electronically mediated forum servers 212. The servers 212 may make the electronically mediated forums accessible over any suitable public or private communication network 214 such as the Internet (or more, specifically, the World Wide Web), or proprietary networks such as enterprise local area or wide area networks, respectively. Given such access, a plurality of audience members 215 (via suitable computer-based devices) may access the forum servers 212 as known in the art.

Furthermore, apparatus 202 may include a GUI, such as GUI 110. As shown in FIG. 2, a user 216 may interact with the GUI 110 of the apparatus 202 over the network 214. That is, the GUI 110 may be provided on a website, for example, that a user 216 may access from their own computing device (not shown). In another example, (illustrated by the dashed line connecting the user 216 and the apparatus 202), the apparatus 202 may be part of the user's computing device, such that interaction with the GUI 110 over the network 214 is not necessary. Furthermore, in one example, the engagement tool 102 of FIG. 1 may be implemented as the GUI 110, processing device 206, and memory 208 of the apparatus 202.

In operation, the processing device 206 of the apparatus 202 is operative to execute the executable instructions 210 from memory 208 causing the processing device to: post a seed message on the electronically mediated forum 112, monitor the electronically mediated forum 112 to detect at least one instance of engagement with the seed message, extract engagement data 120 from the electronically mediated forum 112, analyze the engagement data 120 to provide feedback data 122, and generate a targeted message 128 based on the feedback data 122 such that the targeted message 128 is configured for posting on the electronically mediated forum 112.

While the representative apparatus 202 has been described as one form for implementing the techniques described herein, those having ordinary skill in the art will appreciate that other, functionally equivalent techniques may be employed. For example, as known in the art, some or all of the functionality implemented via executable instructions may be implemented using firmware and/or hardware devices such as application specific integrated circuits (ASICs), programmable logic arrays, state machines, etc. Further still, other implementations of the apparatus 202 may include a greater or lesser number of components than those illustrated. Once again, those of ordinary skill in the art will appreciate the wide number of variations that may be used is this manner.

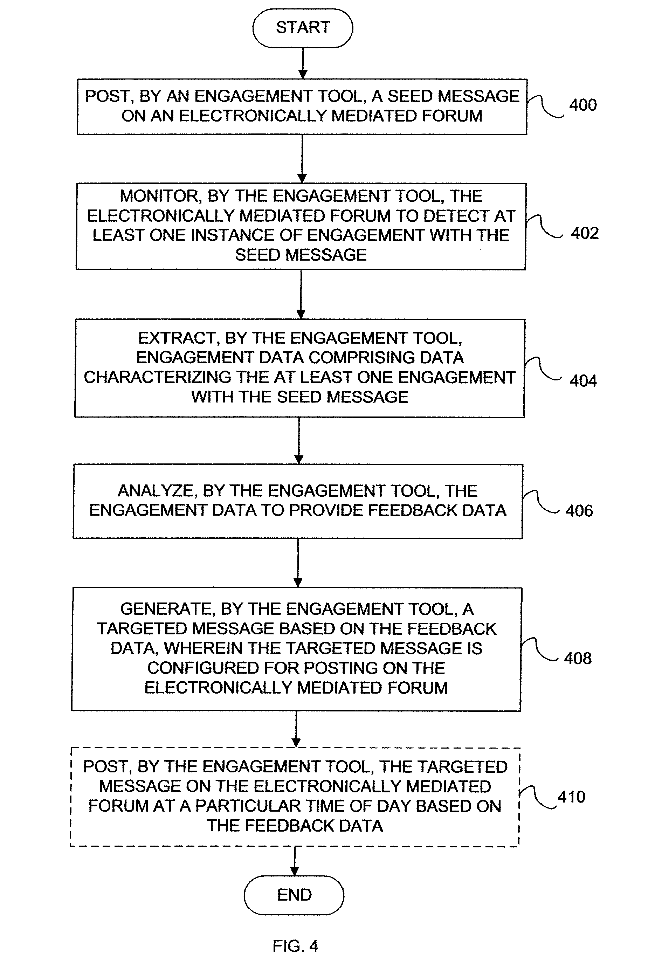

FIG. 4 illustrates one example of a method for engaging with a target audience over an electronically meditated forum in line with the present disclosure. This method may be carried out, for example, by either apparatus 102 or 202 in line with the functionality attributed to those apparatuses described herein. At step 400, a seed message is posted by an engagement tool on an electronically mediated forum. At step 402, the engagement tool monitors the electronically mediated forum to detect at least one instance of engagement with the seed message. At step 404, the engagement tool extracts engagement data comprising data characterizing the at least one engagement with the seed message. At step 406, the engagement tool analyzes the engagement data to provide feedback data. At step 408, the engagement tool generates a targeted message based on the feedback data, wherein the targeted message is configured for posting on the electronically mediated forum. At optional step 410, the targeted message is posted on the electronically mediated forum by the engagement tool at a particular time of day based on the feedback data.

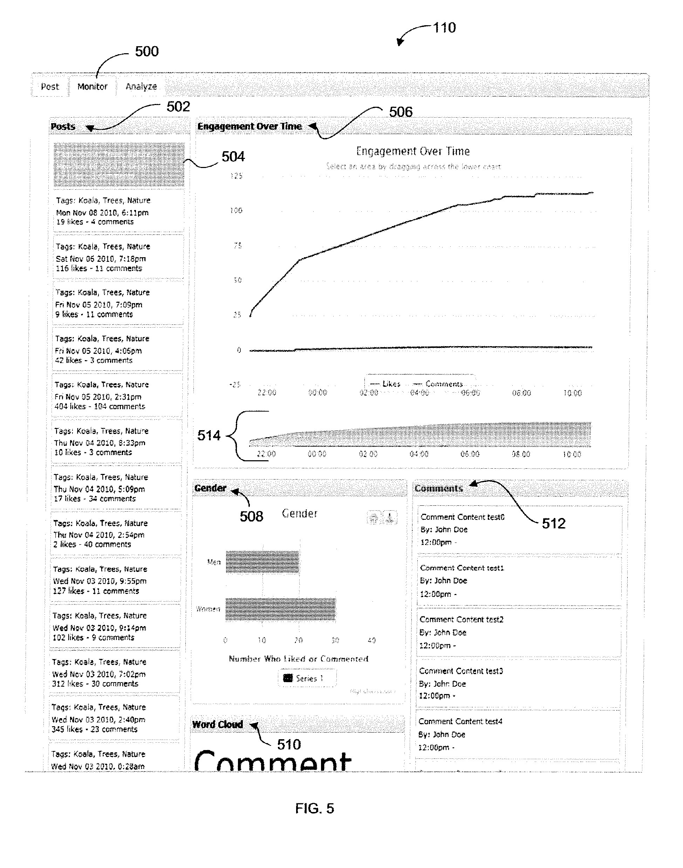

FIG. 5 illustrates another example of the GUI 110 shown in FIG. 3. In this example, the "MONITOR" portion 500 of the GUI 110 is depicted. The monitor portion 500 of the GUI 110 is useful for monitoring how viewers have been engaging with particular posted messages 118. For example, the "Posts" column 502 shows a number of recent posts (e.g., for a particular micro-campaign), with one selected post 504. Data (e.g., engagement data 120 and/or feedback data 122) corresponding to the selected post 502 is shown in the "Engagement Over Time" component 506, the "Gender" component 508, the "Word Cloud" component 510, and the "Comments" component 512. In the example shown in FIG. 5, the Engagement Over Time component 506 shows the number of likes and comments that the selected message 504 elicited over a given time frame. Furthermore, the Engagement Over Time component 506 shows an overall engagement level 514 over the given time frame. The overall engagement level 514 may be based on any suitable engagement data 120, such as, for example, the total number of comments and likes attributed to the selected post 504. The Gender component 508 shows the gender of the viewers who liked or commented on the selected message 504, in this example, although Gender information could also be depicted for other types of engagement as well (e.g., shares). The Word Cloud component 510 may show words that are commonly found in viewers' comments related to the selected post 504 using word cloud techniques known in the art. Finally, the Comments component 512 shows the content (e.g., text and commenting time) of comments related to the selected post 504.

Although not shown, the GUI 110 may additionally include an "ANALYSIS" portion that displays similar data to that displayed in the "MONITOR" portion 500 of the GUI 110. However, in one example, the Analysis components (e.g., Engagement Over Time, Gender, Word Cloud, and Comments components) characterize *all* of the posts of a given user/entity using the GUI 110. That is, the components of the Analysis portion of the GUI 110 may aggregate and/or generalize data concerning *all* of the posted messages 118 for a given user/entity. For example, the Analysis portion may aggregate and/or generalize information about all of the posted messages in a given micro-campaign, or all of the posted messages in all of the micro-campaigns. Thus, the Analysis portion of the GUI 110 may provide a macroscopic view of how a given user/entity's posted messages 118 have been engaging their audience.

The present disclosure provides techniques for engaging with a targeted audience over an electronically mediated forum. Previously, it was difficult to understand who was engaging with a posted message, how they were engaging with the message, why they were engaging with the message, and where they were engaging with the message from. Accordingly, in the past it was difficult to create targeted messages that would attract the desired audience. In contrast, the present disclosure provides techniques and apparatuses that facilitate a greater understanding of how viewers engage with messages posted on electronically mediated forums to ensure that future postings inspire desired effects.

While particular embodiments have been shown and described, those skilled in the art will appreciate that changes and modifications may be made without departing from the instant teachings. It is therefore contemplated that any and all modifications, variations or equivalents of the above-described teachings fall within the scope of the basic underlying principles disclosed above and claimed herein.

## Claims

1. A method for generating an electronic message for a target audience over an electronically mediated forum, the method comprising:
posting, by a processing device, a seed message on the electronically mediated forum;
monitoring, by the processing device, the electronically mediated forum to detect at least one instance of engagement, by a user of the mediated forum, with the seed message;
extracting, by the processing device, engagement data comprising data characterizing the at least one engagement with the seed message;
analyzing, by the processing device, the engagement data to provide feedback data; and
generating, by the processing device, a targeted electronic message based on the feedback data, wherein the targeted electronic message is configured for posting on the electronically mediated forum.

2. The method of claim 1, further comprising:
configuring, by the processing device, engagement parameters, wherein analyzing further comprises:
extracting values from the engagement data to provide extracted values; and
comparing the extracted values with corresponding ones of the engagement parameters to derive comparison results, wherein the feedback data comprises the comparison results.

3. The method of claim 2, wherein generating the targeted electronic message comprises modifying the seed message to provide the targeted electronic message based on the comparison results.

4. The method of claim 2 or 3, further comprising:
generating, by the processing device, metatag data describing the seed message to provide generated metatag data; and
comparing, by the processing device, the generated metatag data with the comparison results to provide metatag comparison results, wherein generating the targeted electronic message comprises modifying the seed message to provide the targeted electronic message based on the metatag comparison results.

5. The method of any of claims 2 to 4, further comprising:
analyzing, by the processing device, the seed message using a semantic complexity algorithm to provide a seed message complexity rating; and
comparing the seed message complexity rating with the comparison results to provide seed message complexity comparison results, wherein generating the targeted electronic message comprises modifying the seed message to provide the targeted electronic message based on the seed message complexity results.

6. The method of any of claims 1 to 5, further comprising:
posting, by the processing device, the targeted electronic message on the electronically mediated forum at a particular time of day based on the feedback data.

7. An apparatus for generating an electronic message for a target audience over an electronically mediated forum, the apparatus comprising:
a message generation module operative to:
receive message content and generate an electronic message comprising the message content based on the received message content to provide a generated message, wherein the generated message is configured for posting on the electronically mediated forum; and
post the generated message on the electronically mediated forum to provide a posted message;
a monitoring and extraction module operatively connected to the message generation module, the monitoring and extraction module operative to:
monitor the electronically mediated forum to detect at least one instance of engagement by a user of the mediated forum with the posted message; and
extract engagement data comprising data characterizing the at least one engagement with the posted message;
a data analysis module operatively connected to the monitoring and extraction module, the data analysis module operative to analyze the engagement data to provide feedback data.

8. The apparatus of claim 7, further comprising:
a graphical user interface (GUI) operatively connected to the data analysis module and the message generation module and operative to receive and display the feedback data.

9. The apparatus of claim 8, wherein the GUI is further operative to receive the message content and provide the message content to the message generation module.

10. The apparatus of claim 8 or 9, wherein the GUI is further operative to receive engagement parameters and provide the engagement parameters to the engagement data analysis module.

11. The apparatus of claim 10, wherein the data analysis module is operative to receive the engagement parameters from the GUI, extract values from the engagement data, and compare the extracted values with corresponding ones of the engagement parameters to derive comparison results, wherein the feedback data comprises the comparison results.

12. The apparatus of any of claims 8 to 11, wherein the GUI is further operative to:
receive targeted electronic message content based on the displayed feedback data and provide the targeted electronic message content to the message generation module.

13. The apparatus of claim 12, wherein the message generation module is operative to receive the targeted electronic message content and generate a targeted electronic message comprising the targeted electronic message content based on the received targeted electronic message content to provide a generated targeted electronic message.

14. The apparatus of claim 13, wherein the message generation module is further operative to post the generated targeted electronic message on the electronically mediated forum.

15. A memory comprising executable instructions that when executed by a processing device cause the method of any of claims 1 to 6 to be performed.
